# EUROPEAN PATENT SPECIFICATION

(11) **EP 3 860 196 B1**
(45) Date of publication and mention of the grant of the patent: **09.04.2025**
(21) Application number: 18934547.3
(22) Date of filing: 27.09.2018
(51) Int. Cl.: H04W 36/00, H04W 4/00

(54) **USER EQUIPMENT MEASUREMENT GAP TIMING**
MESSLÜCKEN-TIMING EINES BENUTZERENDGERÄTS
SYNCHRONISATION D'INTERVALLE DE MESURE D'ÉQUIPEMENT D'UTILISATEUR

(43) Date of publication of application: 04.08.2021
(73) Proprietor: NTT DOCOMO, INC., Chiyoda-ku, Tokyo 100-6150 (JP)
(72) Inventor: TAKADA, Takuma, Tokyo 100-6150 (JP)
(74) Representative: Hoffmann Eitle
(86) International application number: PCT/JP2018/036152
(87) International publication number: WO 2020/065897

(56) References cited:
- WO-A1-2016/074883
- JP-A- 2017 041 676
- US-A1- 2017 048 108
- US-A1- 2017 201 987
- NOKIA ET AL: "CR for remaining issues for RLM", vol. RAN WG4, no. Gothenburg, Sweden; 20180820 - 20180824, 29 August 2018 (2018-08-29), XP051580531, Retrieved from the Internet <URL:http://www.3gpp.org/ftp/tsg%5Fran/WG4%5FRadio/TSGR4%5F88/Docs/R4%2D1811681%2Ezip> [retrieved on 20180829]
- ZTE: "Further discussion on same carrier measurement configured by MN and SN", vol. RAN WG4, no. Gothenburg, Sweden; 20180820 - 20180824, 10 August 2018 (2018-08-10), XP051579669, Retrieved from the Internet <URL:http://www.3gpp.org/ftp/tsg%5Fran/WG4%5FRadio/TSGR4%5F88/Docs/R4%2D1810743%2Ezip> [retrieved on 20180810]
- ZTE ET AL.: "Way forward on UE behavior before or after measurement gap", 3GPP TSG-RAN WG4 MEETING #88 R4-1811869, 29 August 2018 (2018-08-29), pages 1 - 9, XP051580707
- ZTE ET AL.: "Discussion on UL transmission after measurement gap", 3GPP TSG-RAN WG4 MEETING #88 R4-1810742, 10 August 2018 (2018-08-10), pages 1 - 4, XP051579668
- LG ELECTRONICS ET AL.: "Discussion on UE behavior in the slot immediately before/after measurement gap", 3GPP TSG-RAN WG4 #88 MEETING R4-1810220, 10 August 2018 (2018-08-10), pages 1 - 9, XP051579223
- INTEL ET AL.: "CR on starting point to execute the measurement gap", 3GPP TSG-RAN4 MEETING #88 R4-1810212, 10 August 2018 (2018-08-10), pages 1 - 6, XP051579215
- NTT DOCOMO, INC. ET AL.: "The definition of measurement gap starting point", 3GPP TSG RAN WG4 MEETING #88BIS R4-1812706, 28 September 2018 (2018-09-28), pages 1 - 3, XP051581418

## Description

### TECHNICAL FIELD

The present invention relates to a user equipment.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced). Moreover, in the 3GPP, further, specification of a succeeding system of the LTE called 5G New Radio (NR) or Next Generation (NG) and the like is being considered.

In the NR, like in the LTE, when a user equipment (User Equipment, UE) performs measurements requiring radio frequency (RF) tuning (RF retuning), a measurement gap (MG) can be set as a period during which no data and control signal are transmitted or received in order to perform the RF retuning.

When a start timing of "SS/PBCH block (SSB)-based RRM Measurement Timing Configuration (SMTC)" is the same as a start timing of the MG, the time required for RF retuning of the MG overlaps with the SMTC and a state that the SSB that follows the SMTC cannot be measured can occur. To handle this problem, a function to advance the start timing of the MG (Measurement Gap Timing Advance (MGTA)) has been introduced.

As a time value for advancing in the MGTA, 0 ms (no advancement), 0.25 ms, and 0.5 ms are stipulated. Moreover, setting of the start timing of the MG in E-UTRA-NR Dual Connectivity (EN-DC) has also been proposed (see Non-Patent Document 1).

### PRIOR ART DOCUMENT

### NON-PATENT DOCUMENT

Non-Patent Document 1: "Way forward on UE behavior before or after measurement gap", R4-1811869, 3GPP TSG-RAN WG4 Meeting #88, 3GPP, August 2018

Document NOKIA et al.: "CR for remaining issued for RLM", 3GPP DRAFT; R4-1811681 relates to requirements for radio link monitoring.

Document ZTE: "Further discussion on same carrier measurement configured by MN and SN"; 3GPP DRAFT; R4-1810743 discusses views on how two measurement objects with the same carrier frequency should be counted if SMTC configurations are different.

Document WO 2016/074883 A1 relates to a method by a UE configured in DC that includes receiving from a network node, configuration information of a measurement gap length for performing one or more radio measurements. Subframe pairs are determined between a MCG and a SCG with respect to measurement gap length in the MCG on which measurement gap length in the SCG can be configured. The measurement gap length is determined in at least the SCG using the determined subframe pairs.

Document US 2017/048108 A1 relates to a method and apparatus for configuring a measurement gap in a wireless communication system. A network transmits a configuration of a measurement gap of a secondary cell group (SCG) in dual connectivity based on a timing of a primary cell (PCell) which belongs to a master cell group (MCG) in dual connectivity. A user equipment (UE) measures inter-frequency or inter-radio access technology (RAT) cells based on the received configuration of the measurement gap of the SCG. The measurement gap of the SCG may be configured as 7 ms.

Document US 2017/201987 A1 relates to an apparatus to be employed in a user equipment (UE). The apparatus includes configuration circuitry operable to determine, based on one or more configuration information messages, a measurement gap for a master evolved Node B (MeNB) that is operable to provide a master cell group (MCG) that is asynchronous with a secondary cell group (SCG) of a secondary evolved Node B (SeNB), wherein subframe boundaries of the MCG are different from subframe boundaries of the SCG; and radio frequency (RF) control circuitry operable to cause RF circuitry to be tuned, at a beginning of the measurement gap based on a subframe boundary of the MCG, to start inter-frequency measurements, wherein the RF circuitry is to be used to transmit or receive data in a serving cell of the MCG and in a serving cell of the SCG.

### SUMMARY OF THE INVENTION

However, when advancing the start timing of the MG according to the MGTA or the like, there may be a situation where there is no reference timing (for example, at a boundary of slots constituting a subframe) that can be referred to in order to determine the start timing of the MG.

For example, when the MGTA of 0.5 ms is applied in the EN-DC, the MG can be started from the middle point (0.5 ms) of LTE subframe (1 ms). However, depending on the NR subcarrier spacing (for example, 15 kHz), the UE cannot obtain the reference timing that can be referred to in order to determine the start timing of the advanced MG.

Therefore, there is a concern that the start timing of the MG in the UE cannot be appropriately determined, or the start timing accuracy of the MG is low.

The present invention has been made in view of the above discussion. One object of the present invention is to provide a user equipment that can maintain a start timing accuracy of the MG even when the start timings of a measurement gap (MG) are different.

This object is achieved with the terminal defined in the independent claim 1. Advantageous embodiment is set out in the dependent claim 2.

### BREIF DESCRIPTION OF DRAWINGS

FIG. 1 is an overall schematic configuration diagram of a radio communication system 10.
FIG. 2 is a functional block diagram of UE 200.
FIG. 3 is a schematic operation diagram of MGTA.
FIG. 4 is a diagram showing an example of a relationship between a start timing of MG when the MGTA is applied and a reference timing used in a target cell.
FIG. 5 is a diagram showing an example of the start timing of the MG based on Operation Example 1 and Operation Example 2.
FIG. 6 is a diagram showing a configuration example of OFDM symbol.
FIG. 7 is a diagram illustrating an example of a hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

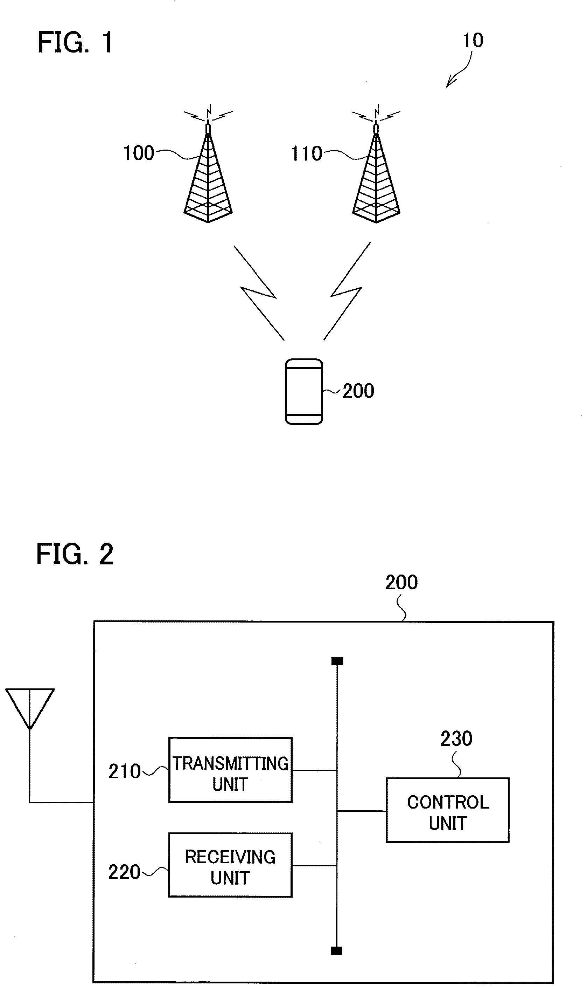

FIG. 1 is an overall schematic configuration diagram of a radio communication system 10 according the present embodiment. The radio communication system 10 is a radio communication system according to Long Term Evolution (LTE) and 5G New Radio (NR). The radio communication system 10 includes a radio base station 100 (hereinafter, "eNB 100"), a radio base station 110 (hereinafter, "gNB 110"), and a user equipment 200 (hereinafter, "UE 200") . A specific configuration of the radio communication system 10, including the number of gNBs and UEs, is not limited to that of the example shown in FIG. 1.

The eNB 100 is a radio base station according to the LTE. The eNB 100 constitutes one or more cells. The gNB 110 is a radio base station according to the 5G. The gNB 110 constitutes one or more cells. Master Cell Group (MCG) and Secondary Cell Group (SCG) can be configured by these cells.

The eNB 100 and the UE 200 perform a radio communication according to the LTE by using one or more carriers. The gNB 110 and the UE 200 perform a radio communication according to the 5G by using one or more carriers.

The eNB 100, the gNB 110 and the UE 200 can handle, by controlling a radio signal transmitted from a plurality of antenna elements, Massive MIMO that generates a beam with a higher directivity, carrier aggregation (CA) that uses a plurality of component carriers (CC), dual connectivity (DC) in which a component carrier is transmitted simultaneously between a plurality of NG-RAN Nodes and the UE, and the like.

### (2) Functional Block Configuration of Radio Communication System

A functional block configuration of the radio communication system 10 will be explained below. Specifically, a functional block configuration of the UE 200 will be described.

FIG. 2 is a functional block diagram of the UE 200. As shown in FIG. 2, the UE 200 includes a transmitting unit 210, a receiving unit 220, and a control unit 230.

The transmitting unit 210 transmits an uplink signal (UL signal) according to the NR.

The receiving unit 220 receives a downlink signal (DL signal) according to the NR. Particularly, in the present embodiment, the receiving unit 220 receives a reference signal (RS). Specifically, the receiving unit 220 receives Radio Link Monitoring-RS (RLM-RS), and the like.

The control unit 230 performs control on the UL signal transmitted by the transmitting unit 210 and the DL signal received by the receiving unit 220.

In the present embodiment, the control unit 230 performs measurements relating to a carrier (beam) transmitted from the eNB 100 or the gNB 110. Specifically, the control unit 230 performs measurement of a cell quality by using a measurement gap.

The measurement gap (MG) is understood as a period during which no data and control signal are transmitted and received in order to be able to perform the measurement of the quality or the like of a desired radio frequency (RF). As an example, the measurement gap is a period during which no data and control signal are transmitted and received in order to be able to perform radio frequency (RF) tuning (RF retuning). Specifically, in the MG, data (Physical Downlink Shared Channel (PDSCH) and Physical Uplink Shared Channel (PUSCH)) and a control signal (Physical Downlink Control Channel (PDCCH) and Physical Uplink Control Channel (PUCCH)) are not transmitted and received.

The control unit 230 performs measurement according to "SS/PBCH block (SSB) -based RRM Measurement Timing Configuration (SMTC)". In the present embodiment, the control unit 230 corresponds to the function for advancing a start timing of MG, specifically, MGTA. The operation based on the MGTA will be explained later.

The control unit 230 controls the start timing of the MG. Specifically, the control unit 230 applies the start timing of the MG according to the type of a reference timing used in a target cell.

More specifically, the control unit 230 applies the start timing of the MG according to a type of a reference timing used for the measurement target cell that is the target for measuring a cell quality. The reference timing is derived from a subframe cycle (1 ms) of the measurement target cell or from a slot (for example, 0.25 ms, 0.5 ms) constituting the subframe. The slot can be referred to as a unit time or TTI.

That is, the control unit 230 can determine the start timing of the MG that matches the boundary of the slot.

The control unit 230 can also apply the start timing of the MG according to a period of the SMTC (predetermined measurement method) set in the measurement target cell. Specifically, the control unit 230 adjusts a start timing of the MG to a start timing of SMTC window set for a cell of Frequency Range 2 (FR2) to be measured.

The control unit 230 can apply the start timing according to a period of a subframe set in the measurement target cell. Particularly, when the measurement target cell supports the LTE, it is preferable to use this method.

In the claimed embodiment, the control unit 230 applies the start timing according to a type of a reference timing used in a communication node that instructs the MG. Specifically, the control unit 230 sets the start timing of the MG set from a secondary node (SN), which is a communication node that instructs the MG, such as Per-FR gap for FR2 (this will be explained in detail later) when performing the EN-DC, so as to match the reference timing (slot boundary) on the SCG side. In the present embodiment, the gNB 110 when performing the EN-DC corresponds to the SN.

### (3) Operation of Radio Communication System

An operation of the radio communication system 10 will be explained below. Specifically, the operation of determining the start timing of the MG performed by the UE 200 will be explained.

### (3.1) Outline of MGTA and Example of Conventional Start Timing of MG

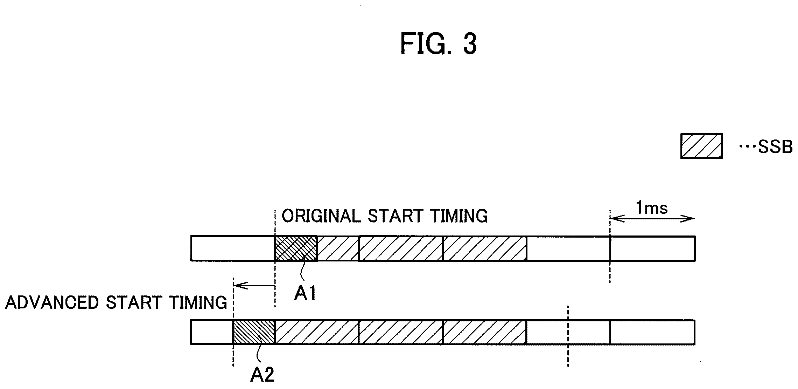

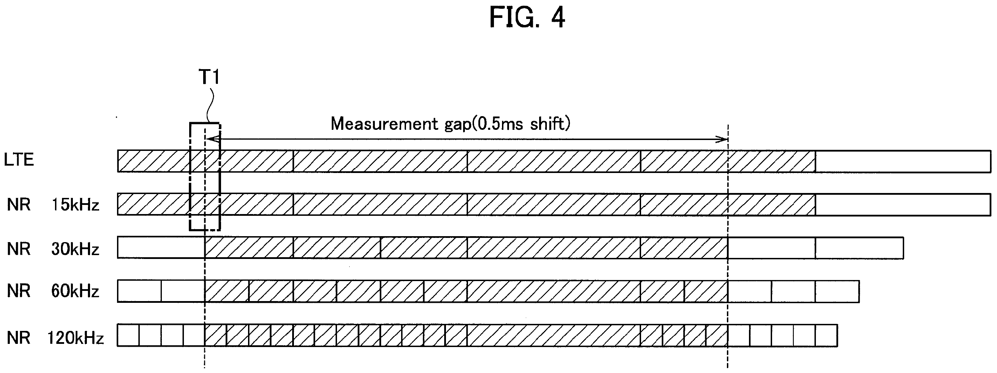

First, with reference to FIGS. 3 and 4, an outline of the MGTA and an example of a conventional start timing of MG will be explained.

FIG. 3 is a schematic operation diagram of the MGTA. Specifically, FIG. 3 shows the start timing of the SMTC (SSB in the figure, hatched area shown with left slanted lines) and the start timing of MG (hatched area shown with right slanted lines). FIG. 3 shows an example in which the MG is 4 ms.

In the upper part of FIG. 3, the start timing of the MG and the start timing of the SMTC coincide, that is, they are simultaneous, and the MG and the SMTC overlap on the time axis. When this happens, because the start timing of the MG is the same as the start timing of the SMTC, the RF retuning time of the MG overlaps with the time of the SMTC, and a situation that the SSB cannot be measured in the SMTC can occur.

In the lower part of FIG. 3, in order to avoid such overlapping of the MG and the SMTC, the MGTA that temporally advances the start timing of MG, that is, brings it forward, is introduced.

Three types of values of the MGTA (advancement time) of 0 ms/0.25 ms/0.5 ms are available. Specifically, 0 ms means that the MG is not advanced. The advancement time 0.5 ms is used when Frequency Range 1 (FR1) is included. The advancement time 0.25 ms is used when the measurement target cell supports only FR2 (only in the case of the Per-FR gap for FR2).

Moreover, as the MG, the following two types are specified.

· Per-UE gap (same as the MG of the LTE)
· Per-FR gap

In the Per-UE gap, regardless of the frequency band of the measurement target cell, only one MG can be set in the UE 200. Also, data cannot be transmitted/received during the MG.

In the Per-FR gap, different MGs can be set for FR1 measurement of the LTE and the NR, and FR2 measurement of the NR, respectively. For example, while the MG is being applied for the FR2 measurement of the NR, communication in the FR1 of the LTE and the NR can continue.

In the NR, several contents of the start timing of the MG have been proposed (for example, see Non-Patent Document 1 mentioned above).

For example, when performing the EN-DC, it is proposed to match with the reference timing on the MCG side (LTE) when it is the Per-UE gap and the MGTA is 0 ms. Specifically, it is proposed to start the MG in accordance with the subframe boundary on the LTE side. Also, when performing the EN-DC, it is proposed to match with the reference timing on the MCG side (LTE) when it is the Per-FR gap for the FR1 measurement of the NR and the MGTA is 0 ms.

On the other hand, in the following cases, how to determine the start timing of the MG is not clear.

· When performing the EN-DC and when the Per-FR gap for the FR2 measurement of the NR is applied
· Standalone (SA) operation that has no dual connectivity
· When the MGTA is applied

FIG. 4 shows an example of a relationship between the start timing of the MG when applying the MGTA and a reference timing used in a target cell. In FIG. 4, each oblong rectangle indicates a subframe or a slot.

As shown in FIG. 4, particularly, when the MGTA is applied when performing the EN-DC, the MG is started from a timing T1 that is in the middle of LTE subframe (after elapsed of 0.5 ms).

However, when the target cell is NR cell and has a subcarrier spacing (SCS) of 15 kHz, the UE 200 does not have the referable reference timing (slot boundary) at the timing T1 (for other subcarrier spacing, referable reference timing at the timing T1 is available).

Therefore, if all the MGs are matched with the reference timing (subframe) on the LTE side in spite of it being the measurement of the NR cell, depending on the specifications of the UE 200, at an unintended timing, that is, at a low precision timing, it is possible that the MG may start. As a result, the start timing accuracy of the MG in the UE 200 decreases, and the quality of the radio communication system 10 as a whole may decline.

### (3.2) Operation Example

An operation example of the UE 200 that solves the above problem will be explained below. In order to solve the above problem, the UE 200 appropriately sets the start timing of the MG and measures an accurate quality of the neighboring cells at the timing intended by the network side.

Specifically, the UE 200 can determine the start timing of the MG according to the measurement target cell that is the target for measuring the cell quality (Operation Example 1).

Also, the UE 200 can determine the start timing based on the type of the reference timing used in the communication node (SN) that instructs the MG (Operation Example 2).

Each operation example will be explained below.

### (3.2.1) Operation Example 1

In this operation example, the start timing of the MG is applied according to the type of the reference timing used for the measurement target cell.

Specifically, regarding the Per-FR gap for the FR2 (Per-FR gap for FR2) when performing the EN-DC, the start timing of the MG is determined based on the start timing of the SMTC window set for the measurement target cell of the FR2, or the slot boundary of the measurement target cell (the cell that uses the FR2 of the NR).

When the EN-DC is not performed (in the case of primary cell (PCell) operation only of the LTE), the start timing of the MG is determined based on the start timing of the SMTC window set for the measurement target NR cell or the slot boundary of the NR cell.

When there is no information on the reference timing (slot boundary), the start timing of the MG can be determined by using the result of "SFN and Frame timing difference measurement (SFTD measurement) " for LTE eNB to acquire the SSB transmission timing of the measurement target NR cell.

Also, when the MGTA has been applied, a position advanced by 1 to 4 slots from the start timing of the SMTC can be used as the start timing of the MG. In this case, it is preferable that the number of slots to be advanced is changed according to the subcarrier spacing (SCS). For example, when the MGTA of 0.5 ms is applied, then 1 slot may be set when the measurement target cell (NR cell) has the spacing of 30 kHz, and 2 slots may be set when the measurement target cell (NR cell) has the spacing of 60 kHz.

Note that, in case of a standalone (SA) operation that has no dual connectivity, the same operation as when the EN-DC is not performed can be performed. Also, when the measurement target cell is LTE cell, the start timing of the MG can be determined according to the LTE subframe (1 ms).

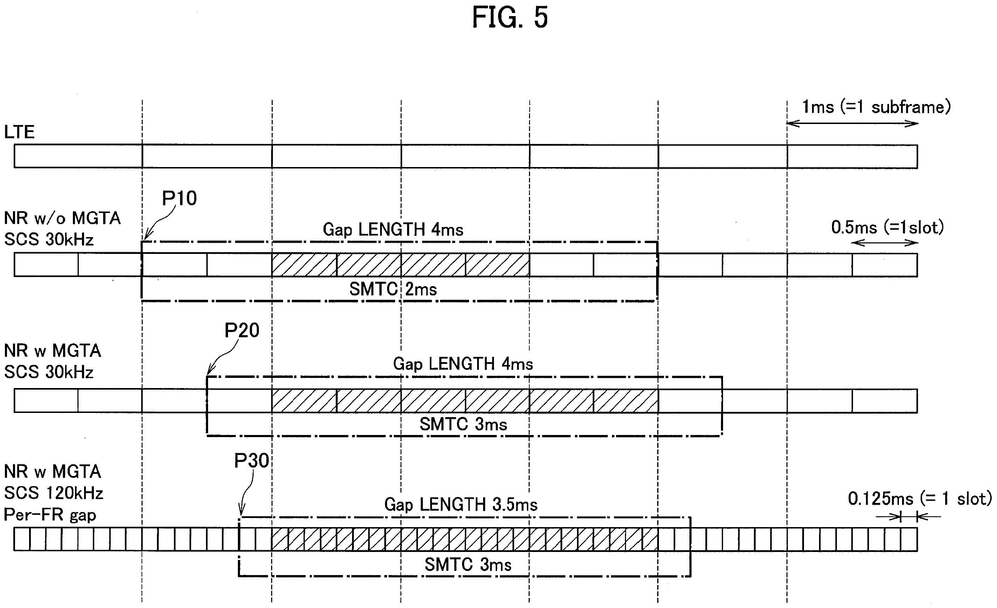

FIG. 5 shows an example of the start timing of the MG based on Operation Example 1 and Operation Example 2. Specifically, in FIG. 5, the start timing of the MG on the NR side when performing the EN-DC is shown.

When the MGTA is not applied and the spacing is 30 kHz, the start timing of the MG (see P10 in the figure) is matched with the LTE subframe. In this case, the MG is 4 ms and the SMTC window is 2 ms.

When the MGTA has been applied, and the spacing is 30 kHz, the start timing of the MG is determined based on the start timing of the SMTC window set for the NR or the slot boundary of the NR cell (P20 in the figure). In this case, the MG is 4 ms and the SMTC window is 3 ms.

In this case (when the MGTA is 0.5 ms), a position that is advanced by the number of slots (1 slot) corresponding to the MGTA is set as the start timing of the MG.

In the case of P10 and P20, it is assumed that the Per-UE gap or Per-FR gap for FR1 has been applied.

Even when the MGTA has been applied and the spacing is 120 kHz, the start timing of the MG is determined based on the start timing of the SMTC window set for the NR or the slot boundary of the NR cell (P30 in the figure). In this case, the MG is 3.5 ms and the SMTC window is 3 ms.

In this case (when the MGTA is 0.25 ms), the position that is advanced by the number of slots (2 slots) corresponding to the MGTA is set as the start timing of the MG.

### (3.2.2) Operation Example 2

In this embodiment, the start timing according to the type of the reference timing used in the communication node (SN) that instructs the MG is applied.

Specifically, for the MG set from the SN, such as the Per-FR gap for FR2 when performing the EN-DC, the start timing of the MG is matched with the reference timing (slot boundary) of the cell of SCG side. As for the MG set from MN when performing the EN-DC, the start timing of the MG is matched with the timing on the LTE side.

Note that, like in Operation Example 1, when the MGTA has been applied, the position advanced by 1 to 4 slots from the start timing of the SMTC can be used as the start timing of the MG.

Referring again to FIG. 5, an example of the start timing of the MG based on Operation Example 2 will be explained. Mainly the operations that are different from Operation Example 1 will be explained below.

When the MGTA is not applied and the spacing is 30 kHz, the start timing of the MG (see P10 in the figure) is matched with the LTE subframe. This operation is the same as Operation Example 1.

When the MGTA has been applied and the spacing is 30 kHz, if the MG is instructed from Master node (MN), the start timing of the MG is matched with the LTE subframe (P20 in the figure) .

Specifically, when the MGTA is not applied, it is sufficient to determine the start timing of the MG based on the timing of the LTE subframe. On the other hand, when the MGTA has been applied, the start timing of the MG is determined based on the timing of the LTE subframe, and the position advanced by the number of slots (one of 1 to 4 slots) corresponding to the spacing of the subcarriers used in the NR cell from the start timing is set as the start timing of the MG.

In this case (when the MGTA is 0.5 ms), like in Operation Example 1, a position advanced by the number of slots (1 slot) according to the MGTA is set as the start timing of the MG.

In the case of P10 and P20, it is assumed that the Per-UE gap or the Per-FR gap for FR1 has been applied.

When the MGTA has been applied and the spacing is 120 kHz, if the MG is instructed from the SN, the start timing of the MG is determined based on the start timing of the SMTC window set for the NR or the slot boundary of the NR cell (P30 in the figure).

In this case (when the MGTA is 0.25 ms), a position advanced by the number of slots (2 slots) corresponding to the MGTA is set as the start timing of the MG.

Note that, when the subcarrier spacing (SCS) applied in the NR cell is 15 kHz, and if there is no frame boundary or slot boundary that can be referred to by the UE 200, such as when the MGTA has been applied, the boundary of OFDM symbol can be referred to.

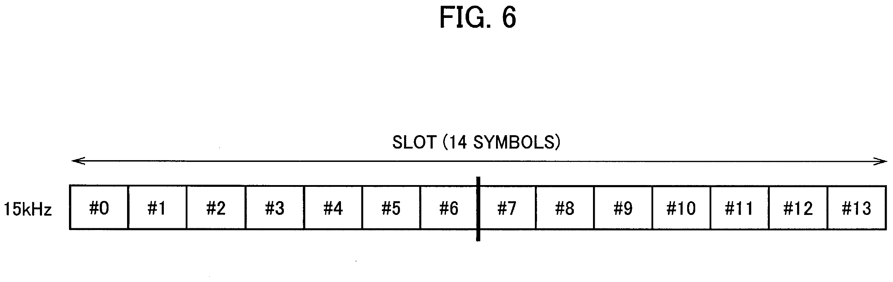

FIG. 6 shows a configuration example of the OFDM symbol. Specifically, FIG. 6 shows an example of 14 OFDM symbols. When the SCS is 15 kHz spacing, a boundary between a symbol #6 and a symbol #7 can be used as the reference timing.

### (4) Advantageous Effects

The following advantageous effects can be obtained with the above-explained embodiments. Specifically, the UE 200 applies the start timing of the MG according to the type of the reference timing used in the target cell. Therefore, it is possible to reliably avoid a state in which the reference timing which can be referred to for determining the start timing of the MG cannot be referred to. This can prevent the start timing accuracy of the MG in the UE 200 from decreasing.

That is, in the UE 200, even when the start timings of the measurement gap (MG) are different, the accuracy of the start timing of the MG can be maintained.

In the present embodiment, the UE 200 can apply the start timing of the MG according to the type of the reference timing used for the measurement target cell that is the target for measuring the cell quality. In the present embodiment, the start timing of the MG can be applied according to the period of the SMTC (predetermined measurement method) set in the measurement target cell, or the period of the subframe set in the measurement target cell.

Therefore, regardless of the type of the measurement target cell, it is possible to avoid a state in which the reference timing which can be referred to for determining the start timing of the MG cannot be referred to. This further reliably prevents the start timing accuracy of the MG in the UE 200 from decreasing.

In the present embodiment, the UE 200 applies the start timing according to the type of the reference timing used in the communication node (such as SN) that instructs the MG.

Therefore, regardless of the type of the communication node that instructs the MG, it is possible to avoid the state in which the reference timing which can be referred to for determining the start timing of the MG cannot be referred to. This further reliably prevents the start timing accuracy of the MG in the UE 200 from decreasing.

### (5) Other Embodiments

Although the contents of the present invention have been described by way of the embodiments, it is obvious to those skilled in the art that the present invention is not limited to what is written here and that various modifications and improvements thereof are possible.

Specifically, Operation Example 1 and Operation Example 2 explained in the above embodiment can be combined. For example, Operation Example 1 can be applied in the standalone operation, and Operation Example 2 can be applied when performing the EN-DC.

Also, if the SMTC is not set for the NR cell, the start timing of the MG can be matched with the timing of the frame used in the NR cell or the timing of the subframe.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

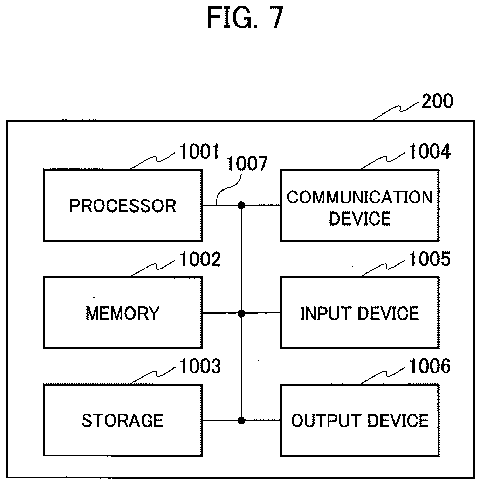

Furthermore, the UE 200 explained above can function as a computer that performs the processing of the radio communication method of the present disclosure. FIG. 7 is a diagram showing an example of a hardware configuration of the UE 200. As shown in FIG. 7, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the device can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X) , or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: radio communication system
- 100: eNB
- 110: gNB
- 200: UE
- 210: transmitting unit
- 220: receiving unit
- 230: control unit
- 1001: processor
- 1002: memory
- 1003: storage
- 1004: communication device
- 1005: input device
- 1006: output device
- 1007: bus

## Claims

1. A terminal (200) comprising a control unit (230) adapted to control a start timing of a measurement gap for Dual Connectivity, DC, wherein
the control unit (230) is configured to
match the start timing with a timing of a sub-frame configured in a cell of a secondary cell group for the measurement gap, MG, such as the Per-FR gap for frequency range 2, FR2, configured from a secondary node, SN, and
the control unit (230) is configured to start the measurement gap, MG, at the start timing.

2. The terminal (200) as claimed in claim 1, wherein the control unit (230) is configured to advance the start timing of the measurement gap, MG.

## Patentansprüche

1. Endgerät (200), umfassend eine Steuereinheit (230), die zum Steuern eines Startzeitpunkts einer Messlücke für duale Konnektivität, DC, angepasst ist, wobei
die Steuereinheit (230) so konfiguriert ist, dass sie den Startzeitpunkt an einen Zeitpunkt eines Sub-Frames anpasst, das in einer Zelle für eine sekundäre Zellengruppe für die Messlücke, MG, so konfiguriert ist, dass die Per-FR-Lücke für den Frequenzbereich 2, FR2, aus einem Sekundärknoten, SN, konfiguriert ist und
die Steuereinheit (230) so konfiguriert ist, dass sie die Messlücke, MG, zum Startzeitpunkt startet.

2. Endgerät (200) nach Anspruch 1, wobei die Steuereinheit (230) so konfiguriert ist, dass sie den Startzeitpunkt der Messlücke, MG, nach vorne verlegt.

## Revendications

1. Terminal (200) comprenant une unité de commande (230) adaptée pour commander une temporisation de démarrage d'un écart de mesure pour double connectivité (DC), dans lequel
l'unité de commande (230) est configurée pour faire correspondre la temporisation de démarrage avec un rythme d'une sous-trame configurée dans une cellule d'un groupe de cellules secondaires pour l'écart de mesure, MG, tel que l'écart Per-FR pour une plage de fréquences 2, FR2, configuré à partir d'un nœud secondaire, SN, et
l'unité de commande (230) est configurée pour faire démarrer l'écart de mesure, MG, au moment de la temporisation de démarrage.

2. Terminal (200) tel que revendiqué dans la revendication 1, dans lequel l'unité de commande (230) est configurée pour faire avancer la temporisation de démarrage de l'écart de mesure, MG.
